# EUROPÄISCHE PATENTSCHRIFT

(11) **EP 2 321 729 B1**
(45) Veröffentlichungstag und Bekanntmachung des Hinweises auf die Patenterteilung: **11.12.2019**
(21) Anmeldenummer: 09780862.0
(22) Anmeldetag: 21.07.2009
(51) Int. Cl.: G06F 11/36

(54) **VERFAHREN UND VORRICHTUNG ZUM ANALYSIEREN EINER AUSFÜHRUNG EINES VORGEGEBENEN PROGRAMMABLAUFS AUF EINEM PHYSISCHEN RECHNERSYSTEM**
METHOD AND DEVICE FOR ANALYZING AN EXECUTION OF A PREDETERMINED PROGRAM FLOW ON A PHYSICAL COMPUTER SYSTEM
PROCÉDÉ ET DISPOSITIF D'ANALYSE DE L'EXÉCUTION D'UN DÉROULEMENT DE PROGRAMME PRÉDÉFINI SUR UN SYSTÈME INFORMATIQUE PHYSIQUE

(30) Priorität: 05.09.2008 DE 102008046018
(43) Veröffentlichungstag der Anmeldung: 18.05.2011
(73) Patentinhaber: Siemens Aktiengesellschaft, 80333 München (DE)
(72) Erfinder: MANGOLD, Florian, 85737 Ismaning (DE); RÖLLE, Harald, 81739 München (DE)
(86) Internationale Anmeldenummer: PCT/EP2009/059340
(87) Internationale Veröffentlichungsnummer: WO 2010/025993

(56) Entgegenhaltungen:
- US-A1- 2005 071 126
- US-A1- 2006 041 417
- "ECU TESTING WITH DSPACE SIMULATOR" CATALOG DSPACE, DSPACE, PADERBORN, DE, 1. Januar 2005 (2005-01-01), Seiten 74-98, XP002423182
- "Space product assurance - Failure modes, effects (and criticality) analysis (FMEA/FMECA)" EUROPEAN COOPERATION FOR SPACE STANDARDIZATION, 30. April 2008 (2008-04-30), Seiten 1-63, XP002550726 Noordwijk, The Netherlands

## Beschreibung

Die vorliegende Erfindung betrifft ein Verfahren zum Analysieren einer Ausführung eines vorgegebenen Programmablaufs auf einem physischen Rechnersystem, welches mehrere zusammenwirkende physische Hardwareeinheiten aufweist. Die Erfindung betrifft ferner eine Rechneranlage, welche sich zur Durchführung des Verfahrens eignet, sowie ein Computerprogrammprodukt, welches die Durchführung eines entsprechenden Verfahrens zur Analyse des Programmablaufs durchführt.

Testen ist einer der Bestandteile des Entwicklungsprozesses von Softwareeinheiten. Hierbei wird beispielsweise getestet ob Softwareeinheiten einer vorgegebenen Spezifikation entsprechen. Dies ist häufig ein iterativer Prozess, wobei nach jedem Testen der jeweiligen Softwareeinheit identifizierte Abweichungen von der Spezifikation behoben werden können. Insbesondere an sicherheitskritischen Softwareprodukten sollte die Möglichkeit in Betracht gezogen werden, dass Teile des Rechnersystems, auf dem die Software ausgeführt wird, defekt sind. Ein Defekt einer Hardwareeinheit reicht vom sporadischen Fehlverhalten bis hin zum Totalausfall. Durch entsprechende Tests kann eine Verhaltensänderung eines Softwareprodukts, welche durch einen Defekt einer Hardwareeinheit verursacht wurde, abgeschätzt werden.

Ein Ansatz um Auswirkungen defekter Hardwareeinheiten auf das Ausführungsverhalten eines Programmablaufs abzuschätzen, ist die Anwendung softwarebasierter Testcodes. Hierbei wird ein Testcode erstellt der explizit die Verhaltensänderungen beim Ausführen eines Programmablaufs unter Verwendung einer defekten Hardwareeinheit simuliert. Dies wird beispielsweise beim Modultest mittels Stubs implementiert. Beim Modultest werden einzelne Module auf ihre Funktionalität validiert, bevor diese integriert werden, um dann die nachfolgenden Tests einer Testhierarchie (z. B. Integrationstest, Systemtest) durchzuführen. Integrieren bezieht sich hierbei auf das Einbinden einzelner Softwaremodule in ein bereits bestehendes, modular aufgebautes Softwaresystem, als auch das Integrieren einzelner Hardwaremodule in ein bereits bestehendes Rechnersystem. Ein Stub ist hierbei ein eigenes Softwaremodul, das Teile von weiteren Softwaremodulen, von Bibliotheken oder des Betriebssystems ersetzt. Die Stubs werden für den Test auf Verhalten bei Hardwaredefekten so implementiert, dass sie das Verhalten anderer Teilmodule bei einem Defekt einer Hardwareeinheit nachbilden.

Eine physische Hardwareeinheit ist beispielsweise eine Festplatte. Um beispielsweise einen Festplattendefekt zu testen, werden Betriebssystemaufrufe durch Aufrufe der Stubs ersetzt, die für das Lesen und das Schreiben von Daten zuständig sind. Anstatt die Funktionalität des Betriebssystems auszuführen, wird ein Stub nur einen Fehlercode, beziehungsweise eine Fehlermeldung, an den aufrufenden Programmablauf zurückliefern. Der Stub ersetzt hierbei nur die erweiterte Funktionalität des getesteten Moduls, andere Teile des Softwaresystems verwenden wie gewohnt den korrekt funktionierenden Betriebssystemaufruf. Nachteilig ist hierbei, dass nur einzelne Module mittels Stubs auf deren Verhalten bezüglich defekter Hardwareeinheiten getestet werden können. Außerdem ist der Entwicklungsaufwand zur Implementierung vorgenannter Stubs nachteilig. Das Gesamtsystem kann mittels softwarebasiertem Testcode auch nicht als Ganzes getestet werden. Insbesondere kann softwarebasierter Testcode nicht das Betriebssystem des physischen Rechnersystems in den Test der Hardwareeinheiten einbeziehen.

Ein weiterer bekannter Ansatz besteht darin, während des Tests die korrekt funktionierende Hardwareeinheit durch eine explizit defekte Hardwareeinheit auszutauschen. Reale, defekte Hardwareeinheiten, die genau in diesen Testfällen zur Anwendung kommen, müssen bezüglich einer vorgegebenen Funktionalität derart variiert werden, dass der vorgegebene Defekt simuliert wird. Dies ist insbesondere deswegen nachteilig, da der derzeitige Markt für Hardwareeinheiten eine hohe Diversität aufweist. So müsste für jede zu testende physische Hardwareeinheit eine entsprechend dem vorgegebenen Defekt variierte Hardwareeinheit bereitgestellt werden. Außerdem müssten bei der Simulation mehrerer defekter Hardwareeinheiten alle Kombinationen der potenziell defekten Hardwareeinheiten simuliert werden. Hierbei kann das Softwaresystem jedoch nur auf genau jene Defekte validiert werden, für die entsprechend defekte Hardware zur Verfügung steht. Weiterhin ist die Validierung auf plötzlich auftretende Defekte mit diesem Verfahren nicht möglich. Ein Defekt der während des Ausführens des Programmablaufs auftritt, beziehungsweise der temporär auftritt, ist jedoch nicht zu simulieren.

US 2006/041417 A1 betrifft ein Softwarepacket mit ergänzenden Schnittstellen und Algorithmen zu und für eine Schaltungs-/Systemsimulation. Es sollen Effekte- und Fehlerbedingungen am elektrischen System eines Fahrzeugs vorhergesagt werden.

Space product assurance - Failure modes, effects (and critically analysis (FMEA/FMECA)) betrifft eine Methodik um systematisch potentielle Fehler in Produkten oder Prozessen zu identifizieren und um Auswirkungen zu bewerten und Minderungsmaßnahmen zu definieren.

US 2005/071126 A1 betrifft ein Computerprogrammprodukt zur Durchführung von Tests einer simulierten Direktzugriffsspeichervorrichtung in einer Testsimulationsumgebung.

Es ist daher eine Aufgabe der vorliegenden Erfindung ein verbessertes Verfahren zum Analysieren einer Ausführung eines vorgegebenen Programmablaufs auf einem Rechnersystem bereitzustellen.

Diese Aufgabe wird durch ein Verfahren zum Analysieren einer Ausführung eines vorgegebenen Programmablaufs gemäß Patentanspruch 1 gelöst.

Demgemäß ist ein Verfahren zum Analysieren einer Ausführung eines vorgegebenen Programmablaufs auf einem physischen Rechnersystem, welches mehrere zusammenwirkende physische Hardwareeinheiten aufweist, vorgesehen. Hierzu wird eine Funktionalität einer physischen Hardwareeinheit als Funktionalität einer virtuellen Hardwareeinheit zum Ausbilden von zumindest einem Teil eines virtuellen Rechnersystems, welches dem physischen Rechnersystem entspricht, nachgebildet. Ferner wird ein erstes Ausführen des Programmablaufs unter Verwendung der nachgebildeten Funktionalität der virtuellen Hardwareeinheit und ein Überwachen eines ersten Ausführungsverhaltens des Programmablaufs ausgeführt. Dann wird ein zweites Ausführen des Programmablaufs unter Verwendung einer variierten Funktionalität der virtuellen Hardwareeinheit und ein Überwachen eines zweiten Ausführungsverhaltens des Programmablaufs ausgeführt. Es wird das erste Ausführungsverhalten mit dem zweiten Ausführungsverhalten verglichen und somit eine Ausführungsverhaltensänderung identifiziert.

Unter Nachbilden der Funktionalität der physischen Hardwareeinheit versteht man das Bereitstellen und Betreiben einer Funktionalität einer virtuellen Hardwareeinheit gemäß der Funktionalität der entsprechenden physischen Hardwareeinheit.

Bei einem Ausführen des Programmablaufs werden die einzelnen Ausführungsschritte des Programmablaufs beispielsweise durch eine Recheneinheit abgearbeitet. Eine Recheneinheit kann beispielsweise als Prozessor, Mikroprozessor, Computer, Computersystem, CPU (= Central processing Unit), arithmetische Recheneinheit oder Schaltkreis ausgeführt sein. Ein Programmablauf kann beispielsweise eine Softwarekomponente sein, welche unter Verwendung einer physischen Hardwareeinheit, welche eine defekte Funktionalität anbietet, ausgeführt wird. Ein Programmablauf kann beispielsweise eine Testroutine, einen Algorithmus, ein Softwareprogramm, eine Befehlssequenz und/oder eine Programmroutine umfassen.

Eine Funktionalität einer physischen Hardwareeinheit oder einer virtuellen, nachgebildeten Hardwareeinheit kann beispielsweise ein Dienst sein, der durch eine entsprechende physische Hardwareeinheit oder eine virtuelle Hardwareeinheit angeboten wird. Ein Dienst ist beispielsweise das Bereitstellen und Betreiben von Ressourcen, welche gemäß einer vorgegebenen Spezifikation Rechenoperationen durchführen. Eine Funktionalität, beispielsweise die einer Festplatte, kann das Bereitstellen von Programmroutinen sein, welche eine Lese- oder eine Schreiboperation durchführen. Die Funktionalität der physischen Hardwareeinheit, nämlich der Festplatte, wird durch Nachbilden der Funktionalität durch eine virtuelle Hardwareeinheit, nämlich die virtuelle Festplatte, bereitgestellt und betrieben.

Beim Ausführen des vorgegebenen Programmablaufs unter Verwendung einer virtuellen Hardwareeinheit ergibt sich aus dem Ausführen ein Ausführungsverhalten. Hierbei enthält ein vorgegebener Programmablauf Parameter, welche während des Ausführens des Programmablaufs mit sich aus dem Programmablauf ergebenden Werten belegt werden. Ein Ausführungsverhalten beschreibt hierbei eine zeitliche Abfolge von Parameterbelegungen. Eine zeitliche Abfolge von Parameterbelegungen ist beispielsweise eine Sequenz von Parameter-Wert-Paaren. Die zeitliche Abfolge von Parameterbelegungen kann beispielsweise in einer Logdatei, welche während des Ausführens des vorgegebenen Programmablaufs mitprotokolliert wird, beschrieben sein.

Weiterhin kann ein Ausführungsverhalten durch eine zeitliche Abfolge von Ausführungszuständen beschrieben sein. Ausführungszustände beziehen sich auf das Ausführen des Programmablaufs und können sich während oder nach dem Ausführen einzelner Ausführungsschritte ändern. Ein Programmablauf kann beispielsweise den Ausführungszustand nicht terminiert aufweisen, was bedeutet, dass die Befehlssequenz des Programmablaufs nicht abgearbeitet ist. Ist die Befehlssequenz abgearbeitet, so ist der entsprechende Ausführungszustand des Programmablaufs terminiert. Führt beispielsweise ein Defekt einer Hardwareeinheit zu einem Systemabsturz oder zu einem indeterminierten Systemzustand, so gilt der Ausführungszustand des Programmablaufs als abgebrochen.

Ein Ausführungsverhalten kann außerdem durch eine zeitliche Abfolge von Leistungskenngrößen bezüglich des Ausführens einzelner Ausführungsschritte beschrieben werden. So weist beispielsweise ein Ausführungsschritt einen hohen Umfang einzelner Befehlsschritte auf. Eine Leistungskenngröße ist hierbei beispielsweise die benötigte Ausführungszeit des entsprechenden Ausführungsschritts. Weist eine Hardwareeinheit einen Defekt auf, so kann es sein, dass die durch das Ausführen des Programmablaufs geforderte Funktionalität der defekten Hardwareeinheit nur zeitlich verzögert bereitgestellt und betrieben werden kann. Die Funktionalität wird somit korrekt bereitgestellt, das Ausführungsverhalten der Hardwareeinheit weist jedoch verminderte Leistungskenngrößen auf. Weist beispielsweise ein Speicher einen Defekt auf, so kann die Funktionalität des Schreibens von Dateneinheiten auf den Speicher nur nach wiederholten Versuchen gemäß der Spezifikation durchgeführt werden, wodurch eine verminderte Leistungskenngröße bezüglich der Leistungskenngröße, welche sich aus der Spezifikation des Speichers ergibt, resultiert.

Der Unterschied zwischen einem Ausführungsverhalten einer Hardwareeinheit gemäß Spezifikation und dem Ausführungsverhalten einer Hardwareeinheit gemäß einem Defekt wird zum Beispiel als Ausführungsverhaltensänderung bezeichnet.

Zum Vergleichen zweier Ausführungsverhalten können die zeitlichen Abfolgen von Parameterbelegungen während des Ausführens des Programmablaufs, oder zeitliche Abfolgen von Ausführungszuständen und/oder zeitliche Abfolgen von Leistungskenngrößen die sich während des Ausführens des Programmablaufs ergeben, verglichen werden. Beispielsweise können hierzu Änderungen in entsprechenden Ausführungsprotokollen, wie beispielsweise eine Logdatei, markiert werden. Durch Markierung der Änderungen der beiden Ausführungsverhalten wird die Ausführungsverhaltensänderung dann identifiziert.

Nach dem Vergleichen des ersten und des zweiten Ausführungsverhaltens liegt die Ausführungsverhaltensänderung vor. In einem zusätzlichen Schritt wird die identifizierte Ausführungsverhaltensänderung kompensiert. Der Schritt des Kompensierens ermöglicht es, einen Programmablauf auf einem physischen Rechnersystem auszuführen, wobei eine physische Hardwareeinheit einen Defekt aufweist. Durch den Schritt des Kompensierens ist es möglich, ein Ausführungsverhalten eines defekten physischen Rechnersystems dem Ausführungsverhalten eines nicht-defekten physischen Rechnersystems anzugleichen. Wurde eine Ausführungsverhaltensänderung identifiziert, kann der Programmablauf derart verändert werden, dass er die Ausführensverhaltensänderung vollständig kompensiert. Besteht die Ausführungsverhaltensänderung beispielsweise darin, dass eine Netzwerkkarte empfangene Bits invertiert, so kann ein Kompensieren der Ausführungsverhaltensänderung erfolgen, indem die invertierten empfangenen Bits ein zweites Mal invertiert werden, um die ursprüngliche, fehlerfreie Bitkombination zu erhalten.

Ein weiterer Ansatz zur Kompensation der Ausführungsverhaltensänderung besteht darin, die Funktionalität der physischen Hardwareeinheit zu ändern. Die Änderung der Funktionalität der physischen Hardwareeinheit kann beispielsweise durch ein Austauschen einer physischen Hardwareeinheit durchgeführt werden. Es kann aber auch die physische Hardwareeinheit weiter verwendet werden, wenn beispielsweise durch Reparatur die Funktionalität laut Spezifikation wiederhergestellt wurde. Beispielsweise wird eine Netzwerkkarte, welche Bitfolgen invertiert, derart repariert, dass sie die ursprüngliche, gewünschte Bitkombination ausgibt.

Die Teilschritte des vorgeschlagenen Verfahrens können zumindest teilweise zeitlich parallel ausgeführt werden. Das heißt, dass beispielsweise ein erster Programmablauf zeitlich parallel zu einem zweiten Programmablauf ausgeführt werden kann. Außerdem müssen die entsprechenden Ausführungsverhalten noch nicht vollständig vorliegen, um sie später zu vergleichen. Wird beispielsweise ein Ausführungsverhalten durch eine Logdatei beschrieben, so können die entsprechenden Logdateien des ersten Ausführens des Programmablaufs und die Logdatei des zweiten Ausführens des Programmablaufs bereits während die Logdateien geschrieben werden, zumindest teilweise verglichen werden.
Das Nachbilden der Funktionalität der physischen Hardwareeinheit kann auch Emulieren oder Virtualisieren umfassen. Hierbei kann Emulieren das teilweise Bereitstellen und Betreiben von Funktionalität durch die virtuelle Hardwareeinheit umfassen, wobei nicht bereitgestellte Funktionalität von einer physischen Hardwareeinheit bereitgestellt und betrieben werden kann. Virtualisieren kann hierbei das vollständige Bereitstellen und Betrieben von Funktionalität durch die virtuelle Hardwareeinheit umfassen. Die nachgebildete Hardwareeinheit liegt virtuell vor und wird beispielsweise durch eine Softwarekomponente und/oder durch eine Bibliothek beschrieben und/oder nachgebildet. Die physische Hardwareeinheit liegt physisch, also materiell vor. Virtuelle Hardwareeinheiten können beispielsweise als emulierte Hardwareeinheiten oder als virtualisierte Hardwareeinheiten vorliegen. Somit wird ein physisches Rechnersystem als ein virtuelles Rechnersystem nachgebildet, wobei das virtuelle Rechnersystem wiederum aus mehreren virtuellen Hardwareeinheiten bestehen kann. Ein physisches Rechnersystem kann beispielsweise als Computer, PC, EDV-Anlage, elektronische Datenverarbeitungsanlage, Workstation und/oder EDV-System vorliegen.

Das Variieren der Funktionalität der virtuellen Hardwareeinheit dient dem Simulieren und Testen eines Defekts einer physischen Hardwareeinheit. Das Variieren der Funktionalität der virtuellen Hardwareeinheit kann durch eine Schnittstelleneinrichtung des virtuellen Rechnersystems erfolgen. Die physische Hardwareeinheit wird durch einen Hypervisor als virtuelle Hardwareeinheit nachgebildet.

Zum Variieren der Funktionalität der virtuellen Hardwareeinheit kann der Hypervisor um eine Schnittstelleinrichtung zum Variieren der Funktionalität der virtuellen Hardwareeinheit erweitert werden. Die Schnittstelleneinrichtung ist geeignet, um der virtuellen Hardwareeinheit eine vorgegebene Funktionalität zuzuordnen. Diese Funktionalität wird beim weiteren Ausführen des Programmablaufs bereitgestellt und betrieben. Hierdurch ist es möglich, die Funktionalität der virtuellen Hardwareeinheit während des Abarbeitens des Programmablaufs zu variieren. So kann beispielsweise der Ausfall einer physischen Hardwareeinheit während des Ausführens des Programmablaufs simuliert werden. Über die Schnittstelleneinrichtung kann auch die Funktionalität einer ersten virtuellen Hardwareeinheit in Abhängigkeit einer Funktionalität einer zweiten virtuellen Hardwareeinheit variiert werden. So können funktionale Abhängigkeiten zwischen zwei physischen Hardwareeinheiten simuliert werden. Fällt beispielsweise bei einem physischen Rechnersystem, als eine physische Hardwareeinheit die Hauptplatine aus, so impliziert das ein Ausfallen aller auf der Hauptplatine aufgesteckten Speichervorrichtungen sowie Recheneinheiten. Somit kann das Ausführungsverhalten des Programmablaufs bezüglich Hardwaredefekte mehrerer physischer Hardwareeinheiten überwacht werden.

Ein Überwachen des Ausführungsverhaltens des Programmablaufs umfasst hierbei zum Beispiel Erfassen, Messen, Schätzen, Protokollieren und/oder Speichern von Parameterbelegungen, Ausführungszuständen und/oder Leistungskenngrößen. Das Variieren von Funktionalitäten, kann auch in Abhängigkeit von Funktionalitäten derselben Hardwareeinheit erfolgen. Ist beispielsweise bei einer Grafikkarte ein Speicher defekt, so können beispielsweise Rechenoperationen nicht mehr auf der Grafickarte durchgeführt werden.
Die Erfindung betrifft ferner eine Rechenanlage zum Analysieren einer Ausführung eines vorgegebenen Programmablaufs auf einem physischen Rechnersystem, welches mehrere zusammenwirkende physische Hardwareeinheiten aufweist. Die Rechenanlage kann über eine Steuereinrichtung verfügen, welche ein vorgenanntes Verfahren ausführt. Ferner kann die Rechenanlage eine Nachbildeeinrichtung zum Nachbilden der Funktionalität der physischen Hardwareeinheit, eine Ausführungseinrichtung zum Ausführen des vorgegebenen Programmablaufs, eine Variierungseinrichtung zum Variieren der Funktionalität der virtuellen Hardwareeinheit, eine Überwachungseinrichtung zum Überwachen des Ausführungsverhaltens, eine Vergleichseinrichtung zum Vergleichen der Ausführungsverhalten umfassen. Die Steuereinrichtung umfasst eine Kompensierungseinrichtung zum Kompensieren der Ausführungsverhaltensänderungen.

Die Nachbildeeinrichtung kann die Funktionalität der physischen Hardwareeinheit als Funktionalität der virtuellen Hardwareeinheiten nachbilden und die Funktionalität der physischen Hardwareeinheit durch die Funktionalität der virtuellen Hardwareeinheit bereitstellen und betreiben.

Die Ausführungseinrichtung kann den vorgegebenen Programmablauf unter Verwendung der Funktionalität der virtuellen Hardwareeinheit ausführen. Die Verwendung der Funktionalität der virtuellen Hardwareeinheit kann beispielsweise in passiver oder aktiver Weise durchgeführt werden. Beispielsweise kann eine Hardwareeinheit aktiv Rechenschritte ausführen. Rechenschritte sind beispielsweise Grundrechenoperationen oder Wertzuweisungen an Variablen. Eine passive Verwendung umfasst beispielsweise das Protokollieren von Ausführungsverhalten. Eine Recheneinheit kann als Prozessor, Mikroprozessor, Computer, Computersystem, CPU (=Central processing Unit), arithmetische Recheneinheit oder Schaltkreis ausgeführt sein.

Die Variierungseinrichtung kann die Funktionalität der virtuellen Hardwareeinheiten variieren. Das Variieren umfasst beispielsweise das Zuweisen von Funktionalität an die virtuelle Hardwareeinheit. Wie die Funktionalität der virtuellen Hardwareeinheit zu variieren ist, kann beispielsweise aus einem Datenspeicher ausgelesen werden.

Die Überwachungseinrichtung kann das Ausführungsverhalten des Programmablaufs überwachen. Aufgrund der überwachten Ausführungsverhalten kann die Vergleichseinrichtung die Ausführungsverhaltensänderungen bestimmen.

Die Kompensierungseinrichtung veranlasst ein Kompensieren der identifizierten Ausführungsverhaltensänderungen. Dies kann beispielsweise ein Ändern des Programmablaufs sein. Die Nachbildeeinrichtung, die Ausführungseinrichtung, die Variierungseinrichtung, die Überwachungseinrichtung, die Vergleichseinrichtung und/oder die Kompensierungseinrichtung können in physischer Form vorliegen, sie können aber auch als nachgebildete Hardwareeinheiten virtuell vorliegen, wobei die Funktionalität der physischen Hardwareeinheit zumindest teilweise nachgebildet ist. Beispielsweise können vorgenannte Einrichtungen als Computerprogrammteil implementiert sein.

Die Erfindung betrifft darüber hinaus ein Computerprogrammprodukt, welches die Durchführung eines Verfahrens zum Analysieren einer Ausführung eines vorgegebenen Programmablaufs auf einem physischen Rechnersystem veranlasst.
Somit werden ein Verfahren und eine Vorrichtung zum Analysieren einer Ausführung eines vorgegebenen Programmablaufs auf einem physischen Rechnersystem beschrieben, wodurch umfangreich, präzise und systematische Tests eines Ausführens eines vorgegebenen Programmablaufs auf unterschiedlichen Rechnersystemen ermöglicht werden. Das Ausführungsverhalten des Programmablaufs kann hierbei bei unterschiedlichen Defekten einzelner virtueller Hardwareeinheiten beziehungsweise Kombinationen aus defekten einzelner virtueller Hardwareeinheiten, simuliert werden. Die Verwendung der virtuellen Hardwareeinheiten, ermöglicht es, auch das Betriebssystem des virtuellen Rechnersystems in die Analyse mit einzubeziehen. Auch ist es möglich, Abhängigkeiten zwischen Defekten von physischen Hardwareeinheiten zu simulieren. Es entstehen hierbei keinerlei Kosten zur Beschaffung von defekten Hardwareeinheiten. Die nachgebildeten virtuellen Hardwareeinheiten können beispielsweise in einer Programmbibliothek abgespeichert werden und somit beliebig oft wiederverwendet werden. Somit können sie ohne Mehrfachaufwand repliziert werden. Das erfindungsgemäße Verfahren und die Vorrichtung ermöglichen es außerdem Hardwaredefekte zu beliebigen Zeitpunkten während des Ausführens des Programmablaufs zu simulieren. So können umfangreiche und exakt vordefinierte Szenarien, welche einen Defekt einer physischen Hardwareeinheit beinhalten, analysiert werden. Eine manuelle Modifikation der physischen Hardwareeinheit, sowie des physischen Rechnersystems, wird in dem erfindungsgemäßen Verfahren vermieden.

Weitere vorteilhafte Ausgestaltungen der Erfindung sind Gegenstand der Unteransprüche sowie der im Folgenden beschriebenen Ausführungsbeispiele. Im Weiteren wird die Erfindung anhand beispielhafter Implementierungen unter Bezugnahme auf die beigelegten Figuren näher erläutert. Es zeigt dabei:
- Figur 1: eine schematische Darstellung einer physischen Rechneranlage, welche als virtuelle Rechneranlage nachgebildet wird;
- Figur 2: ein Ablaufdiagramm einer Variante eines Verfahrens zum Analysieren einer Ausführung eines vorgegebenen Programmablaufs;
- Figur 3: eine schematische Darstellung einer Rechneranlage zur Analyse einer Ausführung eines vorgegebenen Programmablaufs;
- Figur 4: ein Ablaufdiagramm einer weiteren Variante eines Verfahrens zum Analysieren einer Ausführung eines vorgegebenen Programmablaufs; und
- Figur 5: eine schematische Darstellung einer weiteren Rechneranlage zur Analyse einer Ausführung eines vorgegebenen Programmablaufs.

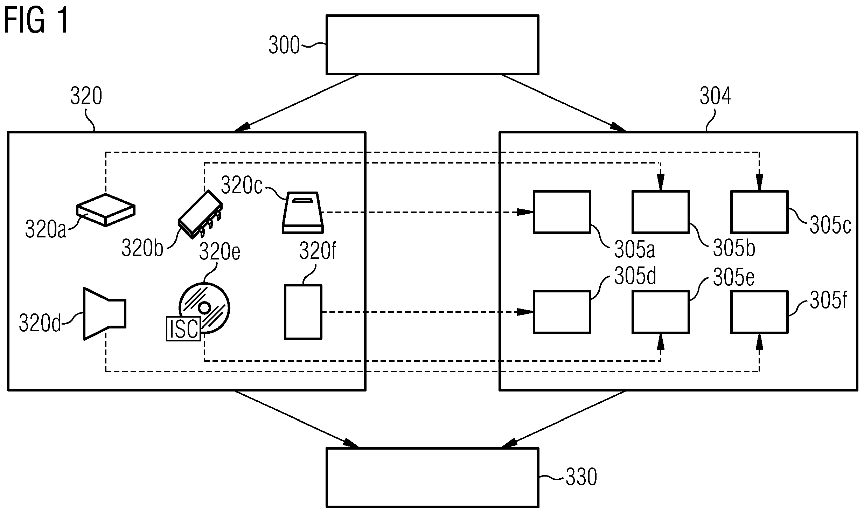

In den Figuren sind gleiche beziehungsweise funktionsgleiche Elemente mit den gleichen Bezugszeichen versehen worden, sofern nichts anderes angegeben ist. Figur 1 zeigt in einer schematischen Darstellung ein physisches Rechnersystem 320, welches als ein virtuelles Rechnersystem 304 nachgebildet wird. Das physische Rechnersystem 320 umfasst mehrere physische Hardwareeinheiten. Im vorliegenden Ausführungsbeispiel sind die physischen Hardwareeinheiten ein Prozessor 320a, ein Controller 320b, eine Festplatte 320c, ein Lautsprecher 320d, ein CD-Laufwerk 320e und eine Grafickarte 320f. Das physische Rechnersystem 320 ist geeignet einen Programmablauf 300 unter Verwendung einer Auswahl der physischen Hardwareeinheiten 320a, 320b, 320c, 320d, 320e oder 320f auszuführen.

Ein Programmablauf 300 kann hierbei beispielsweise eine Softwarekomponente umfassen. Ein Programmablauf 300 kann außerdem eine Testroutine, einen Algorithmus, ein Softwareprogramm, eine Befehlssequenz und/oder eine Programmroutine zur Berechnung einer Ausgabe oder zum Bereitstellen eines Dienstes umfassen.

Im vorliegenden Ausführungsbeispiel ist der Programmablauf 300 eine Backup-Software. Eine Backup-Software speichert bereits vorhandene Dateneinheiten redundant und persistent in zyklischen Zeitabständen. Das Ausführen des Backup-Programms 300 resultiert in einem Ausführungsverhalten 330. Das Ausführungsverhalten 330 des Ausführens des Backup-Programms 300 kann durch eine zeitliche Abfolge von Ausführungszuständen in einzelnen Ausführungsschritten des vorgegebenen Programmablaufs 300 beschrieben werden, durch eine zeitliche Abfolge von Leistungskenngrößen bezüglich des Ausführens einzelner Ausführungsschritte und/oder durch eine zeitliche Abfolge von Parameterbelegungen, welche durch das Ausführen des Programmablaufs 300 veranlasst werden. Während des Ausführens des Backup-Programms 300 veranlasst eben dieses Backup-Programm 300 Parameterbelegungen. Beispielsweise weist das Backup-Programm 300 einem Anfangsparameter einen Anfangszeitstempel des Backup-Prozesses zu und einem Endparameter einen Endzeitstempel des Backup-Prozesses zu.

Ein Ausführungszustand kann sich während oder nach einzelnen Ausführungsschritten des vorgegebenen Programmablaufs 300 ändern. Ein Ausführungszustand kann beispielsweise nicht terminiert, terminiert oder abgebrochen sein. Nicht terminiert beschreibt denjenigen Ausführungszustand in dem das Backup-Programm 300 Daten sichert und entsprechende Befehlssequenzen zum Sichern der Daten abarbeitet. Ist die Befehlssequenz zum Sichern der Daten erfolgreich abgearbeitet, so ist der Ausführungszustand terminiert. Kommt es beispielsweise durch einen Defekt einer Hardwareeinheit 320a, 320b, 320c, 320d, 320e oder 320f zu einem indeterminierten Ausführungsverhalten, Programmabsturz oder reicht zum Beispiel die vorhandene Speicherkapazität der Festplatte 320c nicht zum Speichern der Dateneinheiten, so gilt der Ausführungszustand als abgebrochen.

Eine Leistungskenngröße beschreibt das nicht funktionale Verhalten einer physischen Hardwareeinheit. Beispielsweise ist eine Leistungskenngröße diejenige Zeitdauer, welche das physische Rechnersystem 320 zum Ausführen des Programmablaufs 300 benötigt. Wird beispielsweise das Backup-Programm 300 ausgeführt, so ist eine Leistungskenngröße bezüglich des Backup-Vorgangs 30 Minuten, welche das physische Rechnersystem 320 benötigt, um unter Ausführung des Backup-Programms 300 Dateneinheiten persistent zu speichern. Kommt es zu einem Defekt der Festplatte 320c, so kann diese Festplatte 320c beispielsweise die Dateneinheiten erst nach mehreren Versuchen persistent speichern. Hierdurch kommt es zu einer Minderung der Leistungskenngröße "Ausführungszeit". Ein entsprechendes Ausführungsverhalten 330 wird überwacht. Das Überwachen des Ausführungsverhaltens 330 kann ein Erfassen, Messen, Schätzen, Protokollieren und/Speichern von Parameterbelegungen, Ausführungszuständen und/oder Leistungskenngrößen umfassen.

Um Defekte an den physischen Hardwareeinheiten 320a, 320b, 320c, 320d, 320e, 320f zu simulieren, wird erfindungsgemäß das physische Rechnersystem 320 als virtuelles Rechnersystem 304 nachgebildet. Das Variieren der Funktionalität der virtuellen Hardwareeinheiten 305a, 305b, 305c, 305d, 305e, 305f erlaubt es mögliche Defekte zu reproduzieren und systematisch und ohne Modifikation der physischen Rechneranlage 320 zu analysieren. Das Nachbilden ist in der vorliegenden Figur durch gestrichelte Pfeile angezeigt, wobei die jeweilige physische Hardwareeinheit 320a, 320b, 320c, 320d, 320e, 320f am Pfeilanfang und die entsprechend abgebildete virtuelle Hardwareeinheit 305a, 305b, 305c, 305d, 305e, 305f am Pfeilende angetragen ist. Hierbei können funktionsfähige physische Hardwareeinheiten 320a, 320b, 320c, 320d, 320e, 320f mit spezifikationsgemäßer Funktionalität als virtuelle Hardwareeinheiten 305a, 305b, 305c, 305d, 305e, 305f nachgebildet werden. Es können aber auch defekte Hardwareeinheiten mit variierter Funktionalität als virtuelle Hardwareeinheiten 305a, 305b, 305c, 305d, 305e, 305f nachgebildet werden. Wird der Programmablauf 300 durch das virtuelle Rechnersystem 304 ausgeführt, so ergibt sich ein gleiches Ausführungsverhalten 330, wie bei beim Ausführen des Programmablaufs 300 durch das physische Rechnersystem 320. Das identische Ausführungsverhalten 330 des physischen Rechnersystems 320 und des virtuellen Rechnersystems 304 erlaubt es, entsprechend Rückschlüsse des Ausführungsverhaltens des Programmablaufs 300 auf dem virtuellen Rechnersystem 304 auf das Ausführungsverhalten 330 des Programmablaufs auf dem physischen Rechnersystem 320 zu treffen.

Ist der Programmablauf 300 beispielsweise eine Backup-Software, so kann die Backup-Software 300 auf den virtuellen Hardwareeinheiten 305a, 305b, 305c, 305d, 305e, 305f ausgeführt werden. Die virtuellen Hardwareeinheiten 305a, 305b, 305c, 305d, 305e, 305f stellen die Funktionalität gemäß der physischen Hardwareeinheiten 320a, 320b, 320c, 320d, 320e, 320f bereit und betreiben diese. Das heißt, dass Dateneinheiten auf einer virtuellen Festplatte 305c gespeichert werden können. Das virtuelle Rechnersystem 304 wirkt durch ein physisches Rechnersystem 320, welches dem physischen Rechnersystem 320 entsprechen kann. Das heißt, dass das virtuelle Rechnersystem 304 auf demselben physischen Rechnersystem 320 nachgebildet werden kann, es kann aber auch das virtuelle Rechnersystem 304 auf einem anderen beliebigen physischen Rechnersystem ungleich dem Rechnersystem 320 ausgeführt, beziehungsweise nachgebildet werden.

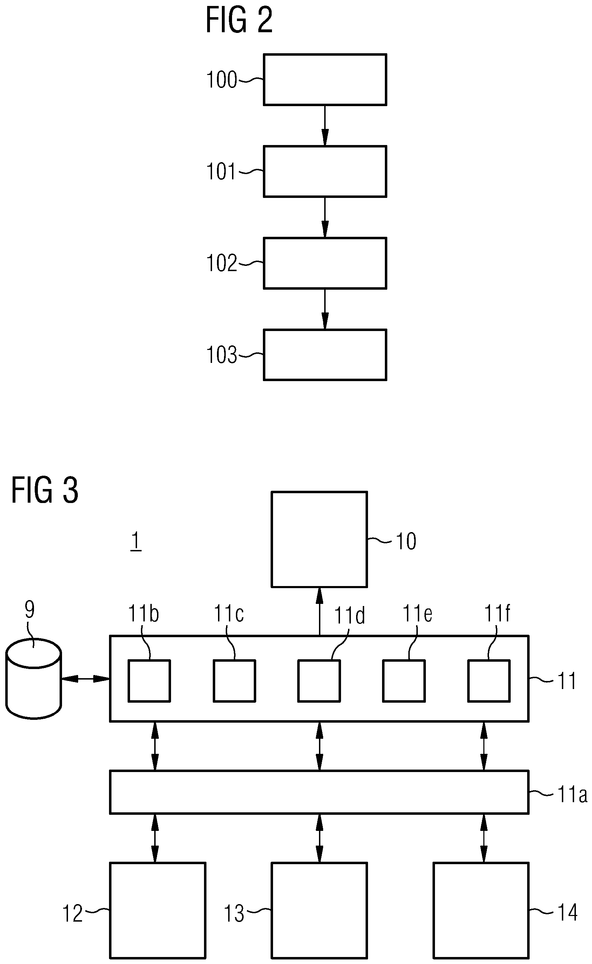

Figur 2 beschreibt ein Ablaufdiagramm einer Variante eines Verfahrens zum Analysieren einer Ausführung eines vorgegebenen Programmablaufs auf einem physischen Rechnersystem. Hierzu wird in einem ersten Schritt 100 ein vorgegebener Programmablauf unter Verwendung einer virtuellen Hardwareeinheit mit nachgebildeter Funktionalität ausgeführt. Hierbei wird entsprechendes Ausführungsverhalten des Programmablaufs überwacht. Bei einem zweiten Ausführen des Programmablaufs wird die virtuelle Hardwareeinheit mit variierter Funktionalität verwendet. Somit wird in Verfahrensschritt 101 das Ausführen eines Programmablaufs unter Verwendung einer defekten physischen Hardwareeinheit simuliert. In einem Verfahrensschritt 102 wird das Ausführungsverhalten des ersten Ausführens des

Programmablaufs und das Ausführungsverhalten des zweiten Ausführens des Programmablaufs verglichen und somit eine Ausführungsverhaltensänderung identifiziert. Aufgrund der identifizierten Ausführungsverhaltensänderung wird in einem Verfahrensschritt 103 eine Kompensierung der Ausführungsverhaltensänderung durchgeführt. Dies geschieht entweder durch Verändern des Programmablaufs oder durch Verändern der Funktionalität der verwendeten virtuellen Hardwareeinheit.

Figur 3 zeigt eine schematische Darstellung einer Rechneranlage 1 zur Analyse einer Ausführung eines vorgegebenen Programmablaufs auf einem physischen Rechnersystem. Die in der Figur 2 angegebenen Schritte können zum Beispiel in einem entsprechenden Rechnersystem abgearbeitet werden. Die Rechneranlage 1 verfügt über eine Steuereinrichtung 11, die über eine Schnittstelleneinrichtung 11a mit den Nachbildeeinrichtungen 12, 13 und 14 kommuniziert. Die Kommunikation ist durch Doppelpfeile angedeutet. Beispielsweise handelt es sich bei einem Block 12 um eine Nachbildeeinrichtung zum Nachbilden einer Festplatte, bei einem Block 13 um eine Nachbildeeinrichtung zum Nachbilden eines Wechselspeicherlaufwerks und bei einem Block 14 um eine Nachbildeeinrichtung zum Nachbilden einer Netzwerkkarte. Hierbei sind auch Nachbildeeinrichtungen zum Nachbilden anderer physischer Hardwareeinheiten denkbar. Die physischen Hardwareeinheiten sind hierbei zum Betrieb eines physischen Rechnersystems notwenige Hardwarekomponenten, wobei die Verwendung in passiver oder aktiver Weise erfolgen kann.

Analog kann die Verwendung der virtuellen Hardwareeinheiten passive oder aktive Verwendung umfassen. Beispielsweise kann eine virtuelle Hardwareeinheit aktive Rechenschritte Ausführen, beispielsweise Grundrechenoperationen oder Wertzuweisungen an Variablen. Beispielsweise kann ein Nachbilden der Funktionalität der physischen Hardwareeinheit, das Ausführen des Programmablaufs und/oder das Vergleichen der Ausführungsverhalten durch eine virtuelle Hardwareeinheit veranlasst werden, welche als Recheneinheit implementiert ist. Eine Recheneinheit kann als Prozessor, Mikroprozessor, Computer, Computersystem, CPU (=Central processing unit), arithmetische Recheneinheit und/oder Schaltkreis ausgeführt sein. Eine passive Verwendung umfasst beispielsweise das Überwachen der Ausführungsverhalten und/oder das Speichern von Parameterbelegungen, Ausführungszuständen und/oder Leistungskenngrößen.

Das Nachbilden der physischen Hardwareeinheiten durch die Nachbildeeinrichtungen 12, 13 und 14 geschieht durch einen Hypervisor. Das Nachbilden kann ferner auch Emulieren oder Virtualisieren umfassen. Hierbei kann Emulieren das teilweise Bereitstellen von Funktionalität der virtuellen Hardwareeinheit umfassen, wobei nicht bereitgestellte Funktionalität von einer physischen Hardwareeinheit bereitgestellt werden kann. Virtualisieren kann hierbei das vollständige Bereitstellen von Funktionalität durch die virtuelle Hardwareeinheit umfassen. Die nachgebildete Hardwareeinheit liegt virtuell vor und wird beispielsweise durch eine Softwarekomponente und/oder durch eine Bibliothek beschrieben und/oder nachgebildet. Die physische Hardwareeinheit liegt physisch, also materiell vor.

Das Nachbilden der Funktionalität der physischen Hardwareeinheit ist besonders dann vorteilhaft, wenn die physische Hardwareeinheit in Betrieb ist und der Betrieb nicht unterbrochen werden soll. Bietet die physische Hardwareeinheit beispielsweise einen Dienst an, so kann sie nachgebildet werden. Unter Verwendung der nachgebildeten, virtuellen Hardwareeinheit können Ausführungsverhalten bestimmt werden. Der angebotene Dienst kann somit ohne Unterbrechung von der physischen Hardwareeinheit angeboten werden. Insbesondere ist es möglich, das Nachbilden von Hardwareeinheiten software-basiert durchzuführen. Hierzu können Ausführungsverhalten des Ausführens eines vorgegebenen Programmablaufs ohne Modifikation des physischen Rechnersystems systematisch und reproduzierbar analysiert werden. Hierzu kann die Funktionalität der virtuellen Hardwareeinheit variiert werden. Das Variieren der Funktionalität simuliert hierbei einen Defekt der entsprechenden physischen Hardwareeinheit.

Das Variieren der Funktionalität der virtuellen Hardwareeinheit erfolgt beispielsweise über eine Schnittstelleneinrichtung, wobei die Schnittstelleneinrichtung beispielsweise von einem Hypervisor umfasst ist. Das Variieren der Funktionalität der virtuellen Hardwareeinheit erfolgt beispielsweise in Abhängigkeit einer Funktionalität einer weiteren virtuellen Hardwareeinheit. Wie entsprechende Funktionalitäten zu variieren sind und wann entsprechende Funktionalitäten zu variieren sind, kann die Steuereinrichtung 11 beispielsweise aus einem Datenspeicher 9 auslesen. Weiterhin kann der Datenspeicher 9 geeignet sein, resultierende Ausführungsverhalten zu überwachen. Der Datenspeicher 9 kann als jegliche Art von Speicher, beispielsweise als Festplatte, Flashdisk, CD, DVD, Band und/oder als Wechseldatenträger, vorliegen.

Zum Ausführen der in Figur 2 beschriebenen Verfahrensschritte umfasst die Steuereinrichtung 11 eine Ausführungseinrichtung 11c zum Ausführen des vorgegebenen Programmablaufs unter Verwendung der Funktionalität der virtuellen Hardwareeinheit, eine Variierungseinrichtung 11d zum Variieren der Funktionalität der virtuellen Hardwareeinheit während des Ausführens des Programmablaufs, eine Überwachungseinrichtung 11e, zum Überwachen der Ausführungsverhalten und eine Vergleichseinrichtung 11f zum Vergleichen der Ausführungsverhalten und zum Identifizieren einer Ausführungsverhaltensänderung und/oder eine Kompensierungseinrichtung 11b zum Kompensieren der Ausführungsverhaltensänderungen.

Die Ausführungseinrichtung 11c führt dabei einen vorgegebenen Programmablauf unter Verwendung der Funktionalität der virtuellen Hardwareeinheit aus. Der Programmablauf wird somit durch die Funktionalität der virtuellen Hardwareeinheit ausgeführt oder durch die Funktionalitäten der virtuellen Hardwareeinheiten im Zusammenwirken mit der Funktionalität der anderen virtuellen Hardwareeinheiten oder, im Falle eines Emulierens, unter Zusammenwirkung von physischen Hardwareeinheiten mit der virtuellen Hardwareeinheit ausgeführt. Die Verwendung umfasst aktive sowie passive Verwendung.

Die Variierungseinrichtung 11d variiert die Funktionalität der jeweiligen virtuellen Hardwareeinheit. Das Variieren umfasst beispielsweise das Auslesen eines Variierungszeitpunkts und einer neuen Funktionalität einer virtuellen Hardwareeinheit aus einem Datenspeicher 9 und das Zuweisen der neuen Funktionalität an eine virtuelle Hardwareeinheit.

Die Überwachung der Ausführungsverhalten geschieht durch eine Überwachungseinrichtung 11e. Die Überwachungseinrichtung 11e überwacht Ausführungsverhalten einer virtuellen Hardwareeinheit, einer Auswahl von virtuellen Hardwareeinheiten oder des gesamten virtuellen Rechnersystems. Dies kann auch in einer jeweiligen Logdatei abgespeichert werden.

Aus den überwachten Ausführungsverhalten bestimmt die Vergleichseinrichtung 11f die Ausführungsverhaltensänderung des Programmablaufs.

Die Kompensierungseinrichtung 11b analysiert die identifizierte Ausführungsverhaltensänderung und gleicht diese aus. In Abhängigkeit der jeweiligen Ausführungsverhaltensänderung kann beispielsweise der Programmablauf derart geändert werden, dass bei einem erneuten Ausführen des Programmablaufs die identifizierte Ausführungsverhaltensänderung nicht mehr auftritt. Weist beispielsweise ein Plattenspeicher während des Ausführens eines Backup-Programms einen Defekt auf, so kann die Kompensierungsvorrichtung veranlassen, dass der Programmablauf derart geändert wird, dass ein weiterer, vom ersten Plattenspeicher unabhängiger Plattenspeicher verwendet wird. Alternativ kann die Kompensierungseinrichtung 11b veranlassen, dass die Funktionalität der virtuellen Hardwareeinheit geändert wird. Beispielsweise kann die Kompensierungseinrichtung 11b veranlassen, dass bestimmte Teile, beziehungsweise Sektoren eines Speichers nicht mehr angesprochen werden. Somit wird ein Hardwaredefekt in einem entsprechenden Speicher behoben und eine entsprechende Ausführungsverhaltensänderung tritt nicht mehr auf.

Ferner umfasst die in Figur 3 beschriebene Rechneranlage 1 eine Ausgabeeinheit 10, welche die durch die Steuereinrichtung 11 erfassten Ausführungsverhalten ausgibt. Eine Ausgabeeinheit kann hierbei ein Drucker, ein Bildschirm oder eine Vorrichtung zur Wiedergabe eines akustischen Signals sein. Alternativ zu der Ausgabeeinheit kann eine Vorrichtung zum Speichern der Ausführungsverhalten vorgesehen sein. Ausführungsverhaltensänderungen werden ebenfalls durch die Ausgabeeinheit 10 ausgegeben.

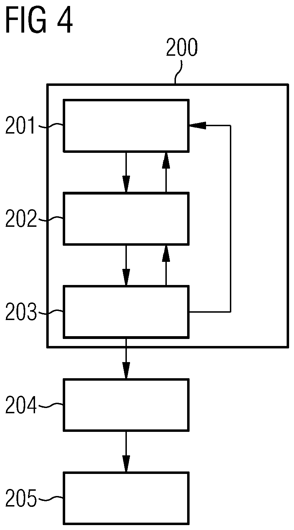

Figur 4 beschreibt ein Ablaufdiagramm einer Variante eines Verfahrens zum Analysieren einer Ausführung eines vorgegebenen Programmablaufs. In einem ersten Verfahrensschritt 200 wird eine Funktionalität einer physischen Hardwareeinheit als eine Funktionalität einer virtuellen Hardwareeinheit nachgebildet. Die nachgebildete, virtuelle Hardwareeinheit findet Verwendung in den Verfahrensschritten 201, 202 und 203 was in Figur 4 durch einen übergeordneten Verfahrensschritt 200 mittels einem die Verfahrensschritte 201, 202, 203 umfassenden Block graphisch dargestellt ist. Der Verfahrensschritt 200 umfasst das Bereitstellen einer Funktionalität einer virtuellen Hardwareeinheit, was beispielsweise durch Emulieren oder Virtualisieren geschehen kann.

Der Verfahrensschritt 200 wird durch einen Hypervisor durchgeführt. Ein Hypervisor kann beispielsweise VMWare sein. Ein Hypervisor kann eine Nachbildeeinrichtung umfassen, beispielsweise die in Figur 3 beschriebene Nachbildeeinrichtung 12 zum Nachbilden einer Festplatte, die Nachbildeeinrichtung 13 zum Nachbilden eines Wechselspeicherlaufwerks und/oder die Nachbildeeinrichtung 14 zum Nachbilden einer Netzwerkkarte.

Emulieren kann das teilweise Bereitstellen von Funktionalität durch die virtuelle Hardwareeinheit umfassen, wobei eine nicht bereitgestellte Funktionalität von einer physischen Hardwareeinheit bereitgestellt werden kann. Beispielsweise können bei einem Emulieren diese Zugriffe auf einen ersten Datensatz einer Festplatte durch eine virtuelle Hardwareeinheit ausgeführt werden und Schreibzugriffe auf einen zweiten Datensatz der Festplatte durch eine physische Hardwareeinheit ausgeführt werden. Virtualisieren kann hierbei das vollständige Bereitstellen von Funktionalität durch die virtuelle Hardwareeinheit beschreiben.

Beispielsweise werden bei einem Virtualisieren einer physischen Festplatte die Funktionalität der physischen Festplatte, wie beispielsweise das Lesen und das Schreiben der Datensätze, durch eine virtuelle Festplatte ausgeführt. Eine virtuelle Festplatte ist hierbei eine virtuelle Hardwareeinheit, welche die Funktionalität einer physischen Festplatte durch Emulieren oder Virtualisieren bereitstellt. Die Funktionalität der virtuellen Hardwareeinheit kann beispielsweise unter Verwendung einer physischen Hardwareeinheit bereitgestellt werden. Analog kann auch eine physische Festplatte Speicherkapazität für mehrere virtuelle Festplatten bereitstellen. Selbst bei einer vollständigen Nachbildung der Funktionalität der physischen Festplatte, wie beispielsweise Schreib- oder Leseoperationen, benötigt also eine virtuelle Festplatte einen physischen Speicher, um einem Betriebsparameter Speicherkapazität entsprechend der vorhandenen physischen Speicherkapazität anbieten zu können.

Beispielsweise kann zu einem Betriebsparameter und/oder zu einer Funktionalität einer virtuellen Hardwareeinheit kein identischer Betriebsparameter und/oder Funktionalität einer physischen Hardwareeinheit vorhanden sein. Die Hardwareeinheit wäre dann rein virtuell. Dann gibt es zur virtuellen Hardwareeinheit keine entsprechende physische Hardwareeinheit.

Nachbilden einer Funktionalität einer physischen Hardwareeinheit kann daher das Bereitstellen und Betreiben einer Funktionalität einer virtuellen Hardwareeinheit gemäß der Funktionalität der jeweiligen physischen Hardwareeinheit umfassen.

In einem Verfahrensschritt 201 wird ein vorgegebener Programmablauf unter Verwendung der Funktionalität der virtuellen Hardwareeinheit ausgeführt. An der Ausführung können neben der virtuellen Hardwareeinheit auch andere virtuelle oder physische Hardwareeinheiten beteiligt sein. Im Programmablauf kann hierbei eine Testroutine, einen Algorithmus, ein Softwareprogramm, eine Befehlssequenz und/oder eine Programmroutine umfassen.

In einem Verfahrensschritt 202 wird die Funktionalität einer virtuellen Hardwareeinheit variiert und somit ein Defekt einer physischen Hardwareeinheit simuliert. Dies kann in Abhängigkeit einer weiteren Funktionalität einer virtuellen Hardwareeinheit geschehen. So kann beispielsweise, wenn die Funktionalität einer Platine ausfällt, das Ausfallen der auf der Platine aufgesteckten Recheneinheiten und/oder Speichereinheit simuliert werden.
Entsprechende Ausführungsverhalten werden in einem Verfahrensschritt 203 überwacht. Das Überwachen der Ausführungsverhalten kann ein Erfassen, Messen, Schätzen, Protokollieren und/oder Speichern von Parameterbelegungen, Ausführungszuständen und/oder Leistungskenngrößen umfassen. Hierzu wird beispielsweise ein Programmablauf unter Verwendung der Funktionalität der virtuellen Hardwareeinheit ausgeführt und sich ein daraus ergebendes Ausführungsverhalten gemessen oder durch beispielsweise statistische Verfahren geschätzt. Das Messen umfasst hierbei jede Art des Beobachtens, des Vergleichens, des digitalen oder des analogen Erfassens von Ausführungsverhalten. Das Schätzen umfasst hierbei jede Art der Hochrechnung, Interpolation, Extrapolation und/oder Inferenz beziehungsweise Deduktion. Als Voraussetzung zum Schätzen kann beispielsweise eine vorgegebene Menge an Informationen vorliegen, welche Erfahrungswerte von Ausführungsverhalten oder bereits überwachte Ausführungsverhalte wiedergeben.

Die Verfahrensschritte 201, 202 und 203 können zumindest teilweise zeitlich parallel ausgeführt werden. So können beispielsweise Ausführungen eines Programmablaufs mehrfach parallel ablaufen, oder es kann eine Ausführung eines Programmablaufs unter Verwendung einer Funktionalität gemäß der jeweiligen Spezifikation ausgeführt werden und eine Ausführung eines Programmablaufs unter Verwendung einer variierten Funktionalität einer virtuellen Hardwareeinheit. Das Überwachen kann parallel zum Ausführen von Programmabläufen ausgeführt werden. Wurden entsprechende Ausführungsverhalten überwacht, werden diese Ausführungsverhalten in Schritt 204 verglichen und somit eine Ausführungsverhaltensänderung identifiziert. Dies kann beispielsweise durch den Vergleich zweier Logdateien geschehen.

In einem Verfahrensschritt 205 wird die identifizierte Ausführungsverhaltensänderung kompensiert. Ein Kompensieren der Ausführungsverhaltensänderung kann beispielsweise durch das Ändern des Programmablaufs oder durch Ändern der Funktionalität der verwendeten virtuellen Hardwareeinheit geschehen.

Beispielsweise wird in Verfahrensschritt 201 ein Backup-Programm ausgeführt. Hierzu werden in Verfahrensschritt 200 benötigte virtuelle Hardwareeinheiten durch Nachbilden der physischen Hardwareeinheiten geschaffen. Ein erstes Ausführen des Backup-Programms, welches in Verfahrensschritt 203 überwacht wird, liefert ein erstes Ausführungsverhalten. Anschließend wird ein Defekt an einer physischen Festplatte simuliert und hierzu in Schritt 202 die Funktionalität der virtuellen Festplatte entsprechend variiert. Ein Ausführen in Verfahrensschritt 201 liefert ein zweites Ausführungsverhalten in Abhängigkeit der variierten Funktionalität der virtuellen Hardwareeinheit. Beispielsweise kann es sein, dass durch einen Totalausfall der Festplatte ein Ausführen nicht möglich ist, wodurch der Ausführungszustand abgebrochen wird. In einem Verfahrensschritt 204 werden ein erstes und ein zweites Ausführungsverhalten verglichen und somit eine Ausführungsverhaltensänderung identifiziert. Hierbei wird beispielsweise identifiziert, dass ein zweites Ausführen des Programmablaufs abgebrochen wurde. In einem Verfahrensschritt 205 wird das Ausführen des Backup-Programms beispielsweise derart variiert, dass das Backup-Programm auf einen anderen unabhängigen Festplattenspeicher zugreift. Alternativ wird ein Austauschen der defekten Festplatte veranlasst.

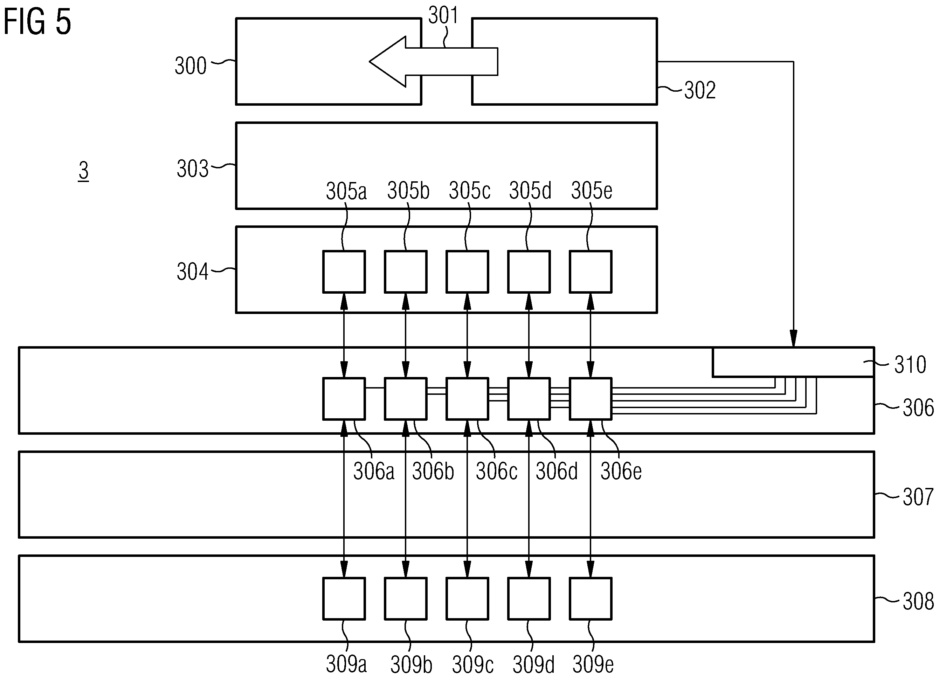

Figur 5 zeigt eine schematische Darstellung einer Rechneranlage 3 zur Analyse eines Ausführens eines vorgegebenen Programmablaufs 300 auf einem physischen Rechnersystem 308. Hierzu wird ein vorgegebener Programmablauf 300 durch ein Testprogramm 302 in einer Instanz eines Tests 301 bezüglich des Ausführungsverhaltens des vorgegebenen Programmablaufs 300 unter Verwendung einer Funktionalität einer virtuellen Hardwareeinheit 305a, 305b, 305c, 305d und/oder 305e getestet. Alternativ kann das Testprogramm 302 auch als "Testdriver" bezeichnet werden. Sowohl der Programmablauf 300 als auch das Testprogramm 302 greift über ein Gastbetriebssystem 303, alternativ auch "Guest-Operating-System" genannt, auf ein virtuelles Rechnersystem 304 zu. Das virtuelle Rechnersystem 304 umfasst die virtuellen Hardwareeinheiten 305a, 305b, 305c, 305d und 305e. Die virtuellen Hardwareeinheiten 305a, 305b, 305c, 305d und 305e werden jeweils durch Nachbildeeinrichtungen 306a, 306b, 306c, 306d und 306e, welche in einer Nachbildevorrichtung 306 umfasst sein können, bereitgestellt. Die Nachbildeeinrichtung 306a, 306b, 306c, 306d und 306e bilden jeweils eine physische Hardwareeinheit 309a, 309b, 309c, 309d und 309e als eine virtuelle Hardwareeinheit 305a, 305b, 305c, 305d und 305e nach.

In einem virtuellen Rechnersystem 304 kann die Anzahl der umfassten virtuellen Hardwareeinheiten 305a, 305b, 305c, 305d, 305e ungleich der Anzahl der physischen Hardwareeinheiten 309a, 309b, 309c, 309d, 309e des nachgebildeten, physischen Rechnersystems 308 sein. Beispielsweise können in einem virtuellen Rechnersystem 304 mehrere virtuelle Hardwareeinheiten 305a, 305b, 305c, 305d, 305e vorhanden sein, welche durch eine einzige physische Hardwareeinheit 309a, 309b, 309c, 309d, 309e betrieben werden. Ein Nachbilden einer physischen Hardwareeinheit 309a, 309b, 309c, 309d, 309e stellt nicht zwangsläufig eine Bijektion zwischen physischen Hardwareeinheiten 309a, 309b, 309c, 309d, 309e und virtuellen Hardwareeinheiten 305a, 305b, 305c, 305d, 305e dar, sondern kann auch eine n:m Abbildung sein. Hierbei sind n und m jeweils natürliche Zahlen, welche die Anzahl der jeweiligen Hardwareeinheiten benennen.

Die Nachbildeeinrichtung 306a, 306b, 306c, 306d und 306e können über eine "Defekt-Simulation-Control" verfügen, welche die Funktionalität der virtuellen Hardwareeinheit 305a, 305b, 305c, 305d und 305e derart variiert, dass ein Defekt einer physischen Hardwareeinheit 309a, 309b, 309c, 309d, 309e nachgebildet wird. Eine "Defekt-Simulation-Control" kann beispielsweise einer in Figur 3 beschriebenen Variierungseinrichtung 11d entsprechen. Defekt-Simulation-Control-Einrichtungen können über die Schnittstelleneinrichtung 310 angesteuert werden. Die physischen Hardwareeinheiten 309a, 309b, 309c, 309d, 309e können beispielsweise als Netzwerkkarte, als Wechselspeicherlaufwerk, als Festplatte, als Speicherbaustein, als Prozessor oder Mikroprozessor vorliegen. Die Funktionalität der virtuellen Hardwareeinheit 305a, 305b, 305c, 305d, 305e kann durch das Testprogramm 302 über eine Schnittstelleneinrichtung 310 zugeordnet beziehungsweise variiert werden. Das Testprogramm 302 veranlasst das Ausführen des Programmablaufs 300 für jeden Test 301 und überwacht die sich aus dem Programmablauf 300 und der variierten Funktionalität der virtuellen Hardwareeinheit 305a, 305b, 305c, 305d, 305e ergebenden Ausführungsverhalten. Ausführungsverhalten werden durch das Testprogramm 302 in einer Logdatei protokolliert.

Die Nachbildevorrichtung 306 mit den ihr zugeordneten Nachbildeeinrichtung 306a, 306b, 306c, 306d und 306e greift über das Hostbetriebssystem 307, alternativ auch "Host-Operating-System" genannt, auf das physische Rechnersystem 308 zu, was in Figur 5 durch bidirektionale Pfeile gekennzeichnet ist. "Guest-Operating-System" 303 und "Host-Operating-System" 307 können beispielsweise als eine Version von Windows oder als einer Version von Linux vorliegen. Das physische Rechnersystem 308 verfügt über die physischen Hardwareeinheiten 309a, 309b, 309c, 309d und 309e.

In einer alternativen Ausführungsform können die Nachbildeeinrichtungen 306a, 306b, 306c, 306d und 306e physische Hardwareeinheiten nachbilden, welche sich bezüglich der Betriebsparameter und der Funktionalität von den physischen Hardwareeinheiten 309a, 309b, 309c, 309d und 309e unterscheiden und somit ein physisches Rechnersystem nachbilden, welches nicht dem physischen Rechnersystem 308 entspricht.
Ein mögliches Anwendungsszenario der in Figur 5 beschriebenen Rechneranlage 3 ist das Testen der Auswirkungen in defekten Hardwareeinheiten eines physischen Rechnersystems 308. Das Nachbilden der physischen Hardwareeinheiten 309a, 309b, 309c, 309d und 309e wird hierbei beispielsweise nicht auf dem physischen Rechnersystem 308 ausgeführt. Es werden lediglich die Hardwareeinheiten des physischen Rechnersystems 308 nachgebildet. Hierzu wird das physische Rechnersystem 308 als virtuelles Rechnersystem 304 nachgebildet. Entsprechende physische Hardwareeinheiten 309a, 309b, 309c, 309d und 309e werden über entsprechende Nachbildeeinrichtungen 306a, 306b, 306c, 306d und 306e als virtuelle Hardwareeinheiten 305a, 305b, 305c, 305d und 305e nachgebildet. Der Programmablauf 300 wird in einem Test 301 durch ein entsprechendes Testprogramm 302 unter Verwendung einer nichtvariierten Funktionalität der Hardwareeinheit ausgeführt und ein zweites Mal unter Verwendung einer variierten Funktionalität der verwendeten Hardwareeinheit ausgeführt. Das Variieren der Funktionalität der Hardwareeinheit 305a, 305b, 305c, 305d und 305e erfolgt durch die Nachbildeeinrichtung 306a, 306b, 306c, 306d und 306e über die entsprechende Schnittstelleneinrichtung 310. Es werden zum Beispiel die in der Figur 4 dargestellten und erläuterten Verfahrensschritte durch die Einrichtungen der Rechneranlage 3 implementiert.
Beispielsweise ist der Programmablauf 300 ein Office-Programm. Eine physische Hardwareeinheit 309a, welche eine physische Festplatte darstellt, wird über eine entsprechende Nachbildeeinrichtung 306a als virtuelle Festplatte 305a nachgebildet. Das Office-Programm 300 wird nun auf einem virtuellen Betriebssystem 303 unter Verwendung der virtuellen Hardwareeinheit 305a, nämlich der virtuellen Festplatte ausgeführt. Daraus ergibt sich ein bestimmtes Ausführungsverhalten. In einem zweiten Ausführen des Office-Programms 300 wird zum Beispiel eine defekte physische Hardwareeinheit 309a, nämlich eine defekte Festplatte verwendet. Hierzu wird die Funktionalität der virtuellen Festplatte 305a über eine entsprechende Schnittstellenvorrichtung 310 und eine entsprechende Nachbildevorrichtung 306a variiert. Das Variieren der Funktionalität simuliert die defekte Funktionalität der Hardwareeinheit 309a. Das Testprogramm 302 veranlasst ferner ein Vergleichen der Ausführungsverhalten des ersten Ausführens und des Ausführungsverhaltens des zweiten Ausführens. Hierdurch wird eine Ausführungsverhaltensänderung identifiziert, welche sich durch einen Defekt in der virtuellen Festplatte ergibt. In weiteren Schritten kann das Testprogramm 302 systematisch alle möglichen Defekte der virtuellen Festplatte 305a sowie alle möglichen Defekte der weiteren Hardwareeinheiten 305b, 305c, 305d und 305e simulieren. Insbesondere können alle Kombinationen der möglichen Defekte simuliert und entsprechend analysiert werden.

Ein entsprechendes physisches Rechnersystem 308 muss hierzu nicht manuell modifiziert werden. Insbesondere wird der Betrieb des physischen Rechnersystems 308 weder eingeschränkt noch unterbrochen. Außerdem wirkt sich im vorgeschlagenen Verfahren und in den Rechneranlagen vorteilig aus, dass ein entsprechender Programmablauf 300, beispielsweise das Office-Programm 300, unter Verwendung eines beliebigen Betriebssystems 303, auch "Guest-Operating-System" genannt, ausgeführt wurde.

Vorteilhaft ist hierbei, dass Ausführungsverhaltensänderungen systematisch, unter Einbeziehung eines Betriebssystems 303, ohne Verwendung teurer, physischer Hardwarekomponenten 309a, 309b, 309c, 309d, 309e und ohne Modifikationen an einem physischen Rechnersystem 308 bestimmt werden können.

Ein Programmablauf 300 kann beliebig oft unter Verwendung der virtuellen Hardwareeinheit 305a, 305b, 305c, 305d und/oder 305e ausgeführt werden. Hierbei kann die Funktionalität der virtuellen Hardwareeinheit 305a, 305b, 305c, 305d und/oder 305e jeweils vor und/oder während des Ausführens des Programmablaufs variiert werden.

## Patentansprüche

1. Verfahren zum Analysieren einer Ausführung eines vorgegebenen Programmablaufs (300) auf einem physischen Rechnersystem (308), welches mehrere zusammenwirkende physische Hardwareeinheiten (309a, 309b, 309c, 309d, 309e) aufweist, mit den Schritten:
- Nachbilden einer Funktionalität einer physischen Hardwareeinheit (309a, 309b, 309c, 309d, 309e) als Funktionalität einer virtuellen Hardwareeinheit (305a, 305b, 305c, 305d, 305e) durch einen Hypervisor zum Bilden zumindest eines Teils eines virtuellen Rechnersystems (304), welches dem physischen Rechnersystem (308) entspricht;
- erstes Ausführen des Programmablaufs (300) unter Verwendung der von dem Hypervisor nachgebildeten Funktionalität der virtuellen Hardwareeinheit (305a, 305b, 305c, 305d, 305e) und Überwachen eines ersten Ausführungsverhaltens des Programmablaufs (300) ;
- Variieren der nachgebildeten Funktionalität der virtuellen Hardwareeinheit (305a, 305b, 305c, 305d, 305e) durch den Hypervisor;
- zweites Ausführen des Programmablaufs (300) unter Verwendung der variierten Funktionalität der virtuellen Hardwareeinheit (305a, 305b, 305c, 305d, 305e) und Überwachen eines zweiten Ausführungsverhaltens des Programmablaufs (300);
- Vergleichen des ersten Ausführungsverhaltens mit dem zweiten Ausführungsverhalten zum Identifizieren einer Ausführungsverhaltensänderung;
- Analysieren der identifizierten Ausführungsverhaltensänderung durch eine Kompensierungseinrichtung (11b); und
- Kompensieren der Ausführungsverhaltensänderung bei einem neuen Ausführen des Programmablaufs mittels der Kompensierungseinrichtung (11b) durch Verändern des Programmablaufs oder durch Verändern der Funktionalität der verwendeten virtuellen Hardwareeinheit, wobei das Verändern der Funktionalität darin bestehen kann, bestimmte Teile der Hardware nicht mehr anzusprechen.

2. Verfahren nach Anspruch 1,
wobei zum Kompensieren der identifizierten Ausführungsverhaltensänderung beim Ausführen des Programmablaufs (300) unter Verwendung der physischen Hardwareeinheit (309a, 309b, 309c, 309d, 309e) die Funktionalität der physischen Hardwareeinheit (309a, 309b, 309c, 309d, 309e) geändert wird, wobei ein Ändern der Funktionalität ein Austauschen der physischen Hardwareeinheit (309a, 309b, 309c, 309d, 309e) umfasst.

3. Verfahren nach einem Anspruch 1 oder 2,
wobei der Programmablauf (300) und/oder die Funktionalität der physischen Hardwareeinheit (309a, 309b, 309c, 309d, 309e) derart geändert wird, dass das erste und das zweite Ausführungsverhalten gleich sind.

4. Verfahren nach einem der Ansprüche 1 bis 3,
wobei ein Ausführungsverhalten durch eine zeitliche Abfolge von Parameterbelegungen, welche durch das Ausführen des Programmablaufs (300) veranlasst werden, beschrieben wird.

5. Verfahren nach einem der Ansprüche 1 bis 4,
wobei ein Ausführungsverhalten durch eine zeitliche Abfolge von Ausführungszuständen in einzelnen Ausführungsschritten des vorgegebenen Programmablaufs (300) beschrieben wird, wobei ein jeweiliger Ausführungszustand nicht-terminiert, terminiert oder abgebrochen ist, wobei der Ausführungszustand während des Ausführens des Programmablaufs (300) nicht-terminiert ist, nach Ausführen des Programmablaufs (300) terminiert ist und bei einem unvorhersehbaren Abbruch des Ausführens des Programmablaufs (300) abgebrochen ist.

6. Verfahren nach einem der Ansprüche 1 bis 5,
wobei ein Ausführungsverhalten durch eine zeitliche Abfolge von Leistungskenngrößen bezüglich des Ausführens einzelner Ausführungsschritte des vorgegebenen Programmablaufs (300) beschrieben wird.

7. Verfahren nach einem der Ansprüche 1 bis 6,
wobei das Nachbilden der Funktionalität der physischen Hardwareeinheit (309a, 309b, 309c, 309d, 309e), das erste Ausführen des Programmablaufs (300) und Überwachen des Ausführungsverhaltens, das zweite Ausführen des Programmablaufs (300) und Überwachen des Ausführungsverhaltens und/oder das Vergleichen der überwachten Ausführungsverhalten zumindest teilweise zeitlich parallel ausgeführt werden kann.

8. Verfahren nach einem der Ansprüche 1 bis 7,
wobei das Nachbilden der Funktionalität der physischen Hardwareeinheit (309a, 309b, 309c, 309d, 309e) Virtualisieren umfasst.

9. Verfahren nach einem der Ansprüche 1 bis 8,
wobei das Nachbilden der Funktionalität der physischen Hardwareeinheit (309a, 309b, 309c, 309d, 309e) Emulieren umfasst.

10. Verfahren nach einem der Ansprüche 1 bis 9,
wobei das Variieren der Funktionalität der virtuellen Hardwareeinheit (305a, 305b, 305c, 305d, 305e) mittels einer Schnittstelleneinrichtung (310) des virtuellen Rechnersystems erfolgt (304).

11. Verfahren nach einem der Ansprüche 1 bis 10,
wobei das Nachbilden der Funktionalität der physischen Hardwareeinheit (309a, 309b, 309c, 309d, 309e) ein Erweitern des Hypervisors um eine Schnittstelleneinrichtung (310) zum Variieren der Funktionalität der virtuellen Hardwareeinheit (305a, 305b, 305c, 305d, 305e) umfasst.

12. Verfahren nach einem der Ansprüche 1 bis 11,
wobei das Variieren einer Funktionalität einer ersten virtuellen Hardwareeinheit (305a, 305b, 305c, 305d, 305e) in Abhängigkeit einer Funktionalität einer zweiten virtuellen Hardwareeinheit (305a, 305b, 305c, 305d, 305e) erfolgt.

13. Verfahren nach einem der Ansprüche 1 bis 12,
wobei das Überwachen des Ausführungsverhaltens des vorgegebenen Programmablaufs (300) Erfassen, Messen, Schätzen, Protokollieren und/oder Speichern von Parameterbelegungen, Ausführungszuständen und/oder Leistungskenngrößen umfasst.

14. Verfahren nach einem der Ansprüche 1 bis 13,
wobei der vorgegebene Programmablauf (300) eine Testroutine, Algorithmus, Software-Programm, Befehlssequenz und/oder Programmroutine umfasst.

15. Rechneranlage (1, 3) zum Analysieren einer Ausführung eines vorgegebenen Programmablaufs unter Verwendung einer physischen Hardwareeinheit (309a, 309b, 309c, 309d, 309e) welche mit mindestens einer weiteren physischen Hardwareeinheit (309a, 309b, 309c, 309d, 309e) als ein physisches Rechnersystem (308) zusammenwirkt, mit einer Steuereinrichtung (11) als ein Hypervisor zum
- Nachbilden einer Funktionalität einer physischen Hardwareeinheit (309a, 309b, 309c, 309d, 309e) als Funktionalität einer virtuellen Hardwareeinheit (305a, 305b, 305c, 305d, 305e), um zumindest ein Teil eines virtuellen Rechnersystems (304), welches dem physischen Rechnersystem (308) entspricht, zu bilden;
- ersten Ausführen des Programmablaufs (300) unter Verwendung der von dem Hypervisor nachgebildeten Funktionalität der virtuellen Hardwareeinheit (305a, 305b, 305c, 305d, 305e) und Überwachen eines ersten Ausführungsverhaltens des Programmablaufs (300);
- Variieren der nachgebildeten Funktionalität der virtuellen Hardwareeinheit (305a, 305b, 305c, 305d, 305e);
- zweiten Ausführen des Programmablaufs (300) unter Verwendung der variierten Funktionalität der virtuellen Hardwareeinheit (305a, 305b, 305c, 305d, 305e) und Überwachen eines zweiten Ausführungsverhaltens des Programmablaufs (300);
- Vergleichen des ersten Ausführungsverhaltens mit dem zweiten Ausführungsverhalten, um eine Ausführungsverhaltensänderung zu identifizieren;
- Analysieren der identifizierten Ausführungsverhaltensänderung durch eine Kompensierungseinrichtung (11b) der Steuereinrichtung (11); und
- Kompensieren der Ausführungsverhaltensänderung bei einem neuen Ausführen des Programmablaufs mittels der Kompensierungseinrichtung (11b) durch Verändern des Programmablaufs oder durch Verändern der Funktionalität der verwendeten virtuellen Hardwareeinheit, wobei das Verändern der Funktionalität darin bestehen kann, bestimmte Teile der Hardware nicht mehr anzusprechen.

16. Rechneranlage (1, 3) nach Anspruch 15,
wobei die Kompensationseinrichtung (11b) der Steuereinrichtung (11) umfasst:
mindestens eine Nachbildeeinrichtung (12, 13, 14) zum Nachbilden der Funktionalität der physischen Hardwareeinheit (309a, 309b, 309c, 309d, 309e), mindestens eine Ausführungseinrichtung (11c) zum Ausführen des vorgegebenen Programmablaufs (300) unter Verwendung der Funktionalität der virtuellen Hardwareeinheit (305a, 305b, 305c, 305d, 305e), mindestens eine Variierungseinrichtung (11d) zum Variieren der Funktionalität der virtuellen Hardwareeinheit (305a, 305b, 305c, 305d, 305e) während des Programmablaufs (300), mindestens eine Überwachungseinrichtung (11e) zum Überwachen des Ausführungsverhaltens und/oder mindestens eine Vergleichseinrichtung (11f) zum Vergleichen der Ausführungsverhalten.

17. Rechneranlage (1, 3) nach Anspruch 15 oder 16,
wobei die Rechneranlage (1, 3) derart ausgestaltet ist, dass ein Verfahren nach einem der Ansprüche 2 bis 15 ausgeführt wird.

18. Rechneranlage (1, 3) nach einem der Ansprüche 15 bis 17, wobei die Nachbildeeinrichtung (12, 13, 14) oder die Steuereinrichtung (11) den Hypervisor enthält, in welchem eine Schnittstelleneinrichtung (310) zum Variieren der Funktionalität der virtuellen Hardwareeinheit (305a, 305b, 305c, 305d, 305e), vorgesehen ist.

19. Rechneranlage (1, 3) nach Anspruch 18,
wobei die Variierungseinrichtung (11d) die Funktionalität der virtuellen Hardwareeinheit (305a, 305b, 305c, 305d, 305e) während des Ausführens des Programmablaufs (300) über die Schnittstelleneinrichtung (310) variiert.

20. Rechneranlage (1, 3) nach einem der Ansprüche 15 bis 19, wobei die Nachbildeeinrichtung (12, 13, 14), die Ausführungseinrichtung (11c), die Variierungseinrichtung (11d), die Überwachungseinrichtung (11e) und die Vergleichseinrichtung (11f) zumindest teilweise als Computerprogramm implementiert sind.

21. Computerprogrammprodukt, welches ein Verfahren nach einem der Ansprüche 1 bis 14 auf einer Rechneranlage (1, 3) nach einem der Ansprüche 15 bis 20 durchführt.

## Claims

1. Method for analysing an execution of a predetermined program flow (300) on a physical computer system (308) which has a plurality of interacting physical hardware units (309a, 309b, 309c, 309d, 309e), comprising the following steps:
- replicating a functionality of a physical hardware unit (309a, 309b, 309c, 309d, 309e) as functionality of a virtual hardware unit (305a, 305b, 305c, 305d, 305e) by way of a hypervisor in order to form at least part of a virtual computer system (304) which corresponds to the physical computer system (308);
- executing the program flow (300) a first time using the functionality of the virtual hardware unit (305a, 305b, 305c, 305d, 305e) replicated by the hypervisor, and monitoring a first execution behaviour of the program flow (300);
- varying the replicated functionality of the virtual hardware unit (305a, 305b, 305c, 305d, 305e) by way of the hypervisor;
- executing the program flow (300) a second time using the varied functionality of the virtual hardware unit (305a, 305b, 305c, 305d, 305e), and monitoring a second execution behaviour of the program flow (300) ;
- comparing the first execution behaviour with the second execution behaviour in order to identify an execution behaviour change;
- analysing the identified execution behaviour change by way of a counterbalancing entity (11b); and
- counterbalancing the execution behaviour change on a new execution of the program flow by means of the counterbalancing entity (11b) by modifying the program flow or by modifying the functionality of the virtual hardware unit used, wherein the modification of the functionality may consist in no longer operating certain parts of the hardware.

2. Method according to claim 1,
wherein the functionality of the physical hardware unit (309a, 309b, 309c, 309d, 309e) is changed in order to counterbalance the identified execution behaviour change when executing the program flow (300) using the physical hardware unit (309a, 309b, 309c, 309d, 309e), wherein a change in the functionality includes an exchanging of the physical hardware unit (309a, 309b, 309c, 309d, 309e).

3. Method according to one of claims 1 to 2,
wherein the program flow (300) and/or the functionality of the physical hardware unit (309a, 309b, 309c, 309d, 309e) is changed such that the first execution behaviour and the second execution behaviour are identical.

4. Method according to one of claims 1 to 3,
wherein an execution behaviour is described by a temporal sequence of parameter assignments which are initiated by the execution of the program flow (300).

5. Method according to one of claims 1 to 4,
wherein an execution behaviour is described by a temporal sequence of execution states in individual execution steps of the predetermined program flow (300), wherein a respective execution state is not-terminated, terminated or cancelled, wherein the execution state is not-terminated during the execution of the program flow (300), is terminated after execution of the program flow (300), and is cancelled in the case of an unpredictable cancellation of the execution of the program flow (300).

6. Method according to one of claims 1 to 5,
wherein an execution behaviour is described by a temporal sequence of performance indicators relating to the execution of individual execution steps of the predetermined program flow (300).

7. Method according to one of claims 1 to 6,
wherein the replication of the functionality of the physical hardware unit (309a, 309b, 309c, 309d, 309e), the first execution of the program flow (300) and monitoring of the execution behaviour, the second execution of the program flow (300) and monitoring of the execution behaviour, and/or the comparison of the monitored execution behaviours can be executed at least to some extent in parallel relative to time.

8. Method according to one of claims 1 to 7,
wherein the replication of the functionality of the physical hardware unit (309a, 309b, 309c, 309d, 309e) comprises virtualisation.

9. Method according to one of claims 1 to 8,
wherein the replication of the functionality of the physical hardware unit (309a, 309b, 309c, 309d, 309e) comprises emulation.

10. Method according to one of claims 1 to 9,
wherein the varying of the functionality of the virtual hardware unit (309a, 309b, 309c, 309d, 309e) is done by means of an interface entity (310) of the virtual computer system (304).

11. Method according to one of claims 1 to 10,
wherein the replication of the functionality of the physical hardware unit (309a, 309b, 309c, 309d, 309e) involves enhancing the hypervisor to include an interface entity (310) for varying the functionality of the virtual hardware unit (305a, 305b, 305c, 305d, 305e).

12. Method according to one of claims 1 to 11,
wherein the varying of a functionality of a first virtual hardware unit (305a, 305b, 305c, 305d, 305e) takes place depending on a functionality of a second virtual hardware unit (305a, 305b, 305c, 305d, 305e).

13. Method according to one of claims 1 to 12,
wherein the monitoring of the execution behaviour of the predetermined program flow (300) comprises capturing, measuring, estimating, logging and/or storing parameter assignments, execution states and/or performance indicators.

14. Method according to one of claims 1 to 13,
wherein the predetermined program flow (300) comprises a test routine, algorithm, software program, instruction sequence and/or program routine.

15. Computer installation (1, 3) for analysing an execution of a predetermined program flow using a physical hardware unit (309a, 309b, 309c, 309d, 309e) which interacts with at least one further physical hardware unit (309a, 309b, 309c, 309d, 309e) as a physical computer system (308), comprising a control entity (11) as a hypervisor for
- replicating a functionality of a physical hardware unit (309a, 309b, 309c, 309d, 309e) as functionality of a virtual hardware unit (305a, 305b, 305c, 305d, 305e), in order to form at least part of a virtual computer system (304) which corresponds to the physical computer system (308);
- executing the program flow (300) a first time using the functionality of the virtual hardware unit (305a, 305b, 305c, 305d, 305e) replicated by the hypervisor, and monitoring a first execution behavior of the program flow (300);
- varying the replicated functionality of the virtual hardware unit (305a, 305b, 305c, 305d, 305e);
- executing the program flow (300) a second time using the varied functionality of the virtual hardware unit (305a, 305b, 305c, 305d, 305e), and monitoring a second execution behaviour of the program flow (300) ;
- comparing the first execution behaviour with the second execution behaviour in order to identify an execution behaviour change;
- analysing the identified execution behaviour change by way of a counterbalancing entity (11b) of the control entity (11); and
- counterbalancing the execution behaviour change on a new execution of the program flow by means of the counterbalancing entity (11b) by modifying the program flow or by modifying the functionality of the virtual hardware unit used, wherein the modification of the functionality may consist in no longer operating certain parts of the hardware.

16. Computer installation (1, 3) according to claim 15,
wherein the counterbalancing entity (11b) of the control entity (11) comprises: at least one replicating entity (12, 13, 14) for replicating the functionality of the physical hardware unit (309a, 309b, 309c, 309d, 309e), at least one execution entity (11c) for executing the predetermined program flow (300) using the functionality of the virtual hardware unit (305a, 305b, 305c, 305d, 305e), at least one variation entity (11d) for varying the functionality of the virtual hardware unit (305a, 305b, 305c, 305d, 305e) during the program flow (300), at least one monitoring entity (11e) for monitoring the execution behavior and/or at least one comparison entity (11f) for comparing the execution behaviours.

17. Computer installation (1) according to claim 15 or 16, wherein the computer installation (1) is configured such that a method according to one of claims 2 to 15 is executed.

18. Computer installation (3) according to one of claims 15 to 17,
wherein the replicating entity (12, 13, 14) or the control entity (11) contains the hypervisor in which an interface entity (310) is provided for varying the functionality of the virtual hardware unit (305a, 305b, 305c, 305d, 305e).

19. Computer installation (1) according to claim18,
wherein the variation entity (11d) varies the functionality of the virtual hardware unit (305a, 305b, 305c, 305d, 305e) via the interface entity (310) during the execution of the program flow (300).

20. Computer installation (1) according to one of claims 15 to 19,
wherein the replicating entity (12, 13, 14), the execution entity (11c), the variation entity (11d), the monitoring entity (11e) and the comparison entity (11f) are implemented at least partially as a computer program.

21. Computer program product, which performs a method according to one of claims 1 to 14 on a computer installation (1, 3) according to one of claims 15 to 20.

## Revendications

1. Procédé d'analyse d'une exécution d'un déroulement de programme prédéfini (300) sur un système informatique physique (308) qui comporte plusieurs unités hardware physiques coopérant entre elles (309a, 309b, 309c, 309d, 309e), comportant les étapes suivantes :
- reproduction d'une fonctionnalité d'une unité hardware physique (309a, 309b, 309c, 309d, 309e) en tant que fonctionnalité d'une unité hardware virtuelle (305a, 305b, 305c, 305d, 305e) par un hyperviseur pour former au moins une partie d'un système informatique virtuel (304) qui correspond au système informatique physique (308) ;
- première exécution du déroulement de programme (300) en utilisant la fonctionnalité de l'unité hardware virtuelle (305a, 305b, 305c, 305d, 305e) reproduite par l'hyperviseur et surveillance d'un premier comportement d'exécution du déroulement de programme (300) ;
- variation de la fonctionnalité reproduite de l'unité hardware virtuelle (305a, 305b, 305c, 305d, 305e) par l'hyperviseur ;
- deuxième exécution du déroulement de programme (300) en utilisant la fonctionnalité de l'unité hardware virtuelle (305a, 305b, 305c, 305d, 305e) après variation, et surveillance d'un deuxième comportement d'exécution du déroulement de programme (300) ;
- comparaison du premier comportement d'exécution avec le deuxième comportement d'exécution pour identifier une modification du comportement d'exécution ;
- analyse de la modification du comportement d'exécution identifiée par un dispositif de compensation (11b) ; et
- compensation de la modification du comportement d'exécution dans le cas d'une nouvelle exécution du déroulement de programme au moyen du dispositif de compensation (11b) par modification du déroulement de programme ou par modification de la fonctionnalité de l'unité hardware virtuelle utilisée, la modification de la fonctionnalité pouvant consister à ne plus faire réagir certaines parties du hardware.

2. Procédé selon la revendication 1, pour compenser la modification du comportement d'exécution identifiée lors de l'exécution du déroulement de programme (300) en utilisant l'unité hardware physique (309a, 309b, 309c, 309d, 309e), la fonctionnalité de l'unité hardware physique (309a, 309b, 309c, 309d, 309e) étant modifiée, une modification de la fonctionnalité incluant un remplacement de l'unité hardware physique (309a, 309b, 309c, 309d, 309e).

3. Procédé selon une revendication 1 ou 2, le déroulement de programme (300) et/ou la fonctionnalité de l'unité hardware physique (309a, 309b, 309c, 309d, 309e) étant modifiés de telle sorte que le premier et le deuxième comportement d'exécution sont identiques.

4. Procédé selon l'une des revendications 1 à 3, un comportement d'exécution étant décrit par une suite temporelle d'affectations de paramètres qui sont provoquées par l'exécution du déroulement de programme (300).

5. Procédé selon l'une des revendications 1 à 4, un comportement d'exécution étant décrit par une suite temporelle d'états d'exécution dans des étapes d'exécution distinctes du déroulement de programme prédéfini (300), un état d'exécution respectif étant non terminé, terminé ou arrêté, l'état d'exécution étant non terminé pendant l'exécution du déroulement de programme (300), terminé après l'exécution du déroulement de programme (300) et arrêté en cas d'arrêt imprévisible de l'exécution du déroulement de programme (300).

6. Procédé selon l'une des revendications 1 à 5, un comportement d'exécution étant décrit par une suite temporelle de caractéristiques de performance en rapport avec l'exécution d'étapes d'exécution distinctes du déroulement de programme prédéfini (300).

7. Procédé selon l'une des revendications 1 à 6, la reproduction de la fonctionnalité de l'unité hardware physique (309a, 309b, 309c, 309d, 309e), la première exécution du déroulement de programme (300) et la surveillance du comportement d'exécution, la deuxième exécution du déroulement de programme (300) et la surveillance du comportement d'exécution et/ou la comparaison des comportements d'exécution surveillés pouvant être exécutées au moins en partie de manière parallèle dans le temps.

8. Procédé selon l'une des revendications 1 à 7, la reproduction de la fonctionnalité de l'unité hardware physique (309a, 309b, 309c, 309d, 309e) incluant la virtualisation.

9. Procédé selon l'une des revendications 1 à 8, la reproduction de la fonctionnalité de l'unité hardware physique (309a, 309b, 309c, 309d, 309e) incluant l'émulation.

10. Procédé selon l'une des revendications 1 à 9, la variation de la fonctionnalité de l'unité hardware virtuelle (305a, 305b, 305c, 305d, 305e) se faisant au moyen d'un dispositif d'interface (310) du système informatique virtuel (304).

11. Procédé selon l'une des revendications 1 à 10, la reproduction de la fonctionnalité de l'unité hardware physique (309a, 309b, 309c, 309d, 309e) incluant un élargissement de l'hyperviseur par un dispositif d'interface (310) pour varier la fonctionnalité de l'unité hardware virtuelle (305a, 305b, 305c, 305d, 305e).

12. Procédé selon l'une des revendications 1 à 11, la variation d'une fonctionnalité d'une première unité hardware virtuelle (305a, 305b, 305c, 305d, 305e) se faisant en fonction d'une fonctionnalité d'une deuxième unité hardware virtuelle (305a, 305b, 305c, 305d, 305e).

13. Procédé selon l'une des revendications 1 à 12, la surveillance du comportement d'exécution du déroulement de programme prédéfini (300) incluant la saisie, la mesure, l'estimation, la protocolisation et/ou la sauvegarde d'affectations de paramètres, d'états d'exécution et/ou de caractéristiques de performance.

14. Procédé selon l'une des revendications 1 à 13, le déroulement de programme prédéfini (300) incluant une routine de test, un algorithme, un programme logiciel, une séquence d'ordres et/ou une routine de programme.

15. Installation informatique (1, 3) pour analyser une exécution d'un déroulement de programme prédéfini en utilisant une unité hardware physique (309a, 309b, 309c, 309d, 309e) qui coopère avec au moins une autre unité hardware physique (309a, 309b, 309c, 309d, 309e) en tant que système informatique physique (308), comprenant un dispositif de commande (11) en tant qu'hyperviseur pour :
- la reproduction d'une fonctionnalité d'une unité hardware physique (309a, 309b, 309c, 309d, 309e) en tant que fonctionnalité d'une unité hardware virtuelle (305a, 305b, 305c, 305d, 305e) pour former au moins une partie d'un système informatique virtuel (304) qui correspond au système informatique physique (308) ;
- la première exécution du déroulement de programme (300) en utilisant la fonctionnalité de l'unité hardware virtuelle (305a, 305b, 305c, 305d, 305e) reproduite par l'hyperviseur et la surveillance d'un premier comportement d'exécution du déroulement de programme (300) ;
- la variation de la fonctionnalité reproduite de l'unité hardware virtuelle (305a, 305b, 305c, 305d, 305e) ;
- la deuxième exécution du déroulement de programme (300) en utilisant la fonctionnalité de l'unité hardware virtuelle (305a, 305b, 305c, 305d, 305e) après variation, et la surveillance d'un deuxième comportement d'exécution du déroulement de programme (300) ;
- la comparaison du premier comportement d'exécution avec le deuxième comportement d'exécution pour identifier une modification du comportement d'exécution ;
- l'analyse de la modification identifiée du comportement d'exécution par un dispositif de compensation (11b) du dispositif de commande (11) ; et
- la compensation de la modification du comportement d'exécution en cas de nouvelle exécution du déroulement de programme au moyen du dispositif de compensation (11b) par modification du déroulement de programme ou par modification de la fonctionnalité de l'unité hardware virtuelle utilisée, la modification de la fonctionnalité pouvant consister à ne plus faire réagir certaines parties du logiciel.

16. Installation informatique (1, 3) selon la revendication 15, le dispositif de compensation (11b) du dispositif de commande (11) comprenant :
au moins un dispositif de reproduction (12, 13, 14) pour reproduire la fonctionnalité de l'unité hardware physique (309a, 309b, 309c, 309d, 309e), au moins un dispositif d'exécution (11c) pour exécuter le déroulement de programme prédéfini (300) en utilisant la fonctionnalité de l'unité hardware virtuelle (305a, 305b, 305c, 305d, 305e), au moins un dispositif de variation (11d) pour varier la fonctionnalité de l'unité hardware virtuelle (305a, 305b, 305c, 305d, 305e) pendant le déroulement de programme (300), au moins un dispositif de surveillance (11e) pour surveiller le comportement d'exécution et/ou au moins un dispositif de comparaison (11f) pour comparer le comportement d'exécution.

17. Installation informatique (1, 3) selon la revendication 15 ou 16, l'installation informatique (1, 3) étant conçue de manière telle qu'un procédé selon l'une des revendications 2 à 15 est exécuté.

18. Installation informatique (1, 3) selon l'une des revendications 15 à 17, le dispositif de reproduction (12, 13, 14) ou le dispositif de commande (11) contenant l'hyperviseur dans lequel est prévu un dispositif d'interface (310) pour varier la fonctionnalité de l'unité hardware virtuelle (305a, 305b, 305c, 305d, 305e).

19. Installation informatique (1, 3) selon la revendication 18, le dispositif de variation (11d) variant la fonctionnalité de l'unité hardware virtuelle (305a, 305b, 305c, 305d, 305e) pendant l'exécution du déroulement de programme (300) via le dispositif d'interface (310).

20. Installation informatique (1, 3) selon l'une des revendications 15 à 19, le dispositif de reproduction (12, 13, 14), le dispositif d'exécution (11c), le dispositif de variation (11d), le dispositif de surveillance (11e) et le dispositif de comparaison (11f) étant implémentés au moins en partie en tant que programme informatique.

21. Produit de programme informatique qui exécute un procédé selon l'une des revendications 1 à 14 sur une installation informatique (1, 3) selon l'une des revendications 15 à 20.
